# EUROPÄISCHE PATENTANMELDUNG

(11) **EP 4 674 710 A1**
(43) Veröffentlichungstag der Anmeldung: **07.01.2026**
(21) Anmeldenummer: 25180472.0
(22) Anmeldetag: 03.06.2025
(51) Int. Cl.: B60T 13/26, B60T 8/32

(54) **SYSTEM ZUR STEUERUNG EINES BREMSDRUCKS FÜR EIN ANHÄNGERFAHRZEUG**

(30) Priorität: 01.07.2024 DE 102024206151
(71) Anmelder: ZF CV Systems Global GmbH, 3006 Bern (CH)
(72) Erfinder: Brutt, Mirko, 31832 Springe (DE); Spremberg, Jan, 30974 Wennigsen (DE); Haverkamp, Michael, 30455 Hannover (DE); Chenski, Przemyslaw, 54-234 WROCLAW (PL); Owczarek, Michal, 51-114 WROCLAW (PL); WROCLAW, Magdalena, 54-440 WROCLAW (PL)
(74) Vertreter: ZF Friedrichshafen AG

(57) **Zusammenfassung**

Die Erfindung betrifft ein System (10) zur Steuerung eines Bremsdrucks für ein Anhängerfahrzeug. Das System (10) umfasst ein Ventil (4) mit einer Versorgungsseite (14) und einer Ausgabeseite (15) sowie eine Entlüftungsleitung (13), wobei das System (10) dazu eingerichtet ist, dem Ventil (4) auf seiner Versorgungsseite (14) Druckluft zuzuführen, das Ventil (4) dazu eingerichtet ist, auf seiner Ausgabeseite (15) Druckluft abzugeben, und die Entlüftungsleitung (13) dazu eingerichtet ist, die Ausgangsseite (15) mit der Versorgungsseite (14) zu verbinden.

## Beschreibung

Die Erfindung betrifft ein System zur Steuerung eines Bremsdrucks für ein Anhängerfahrzeug.

Aus der EP 3 892 504 A1 ist ein Anhängersteuermodul einer druckmittelbetriebenen Bremsanlage eines Zugfahrzeugs bekannt. Das Anhängersteuermodul umfasst eine Ventilanordnung zur Steuerung einer pneumatischen Bremsanlage eines Anhängerfahrzeugs, wobei die Ventilanordnung folgendes aufweist: Ein elektronisch gesteuertes Anhängersteuerventil, welches ein pneumatisch gesteuertes Relaisventil mit einem invertierten Steuereingang enthält, ein druckmittelgesteuertes Backupventil, welches ein druckmittelgesteuertes Relaisventil enthält, und mindestens ein elektronisch gesteuertes Parkbremsventil, mittels dem das Relaisventil des Anhängersteuerventils an dessen invertierten Steuereingang pneumatisch ansteuerbar ist. Zusätzlich ist eine Koppeleinrichtung vorhanden, mittels der auch die Parkbremsen des Zugfahrzeugs über das Parkbremsventil betätigbar sind.

Weiterhin lehrt die US 2024/0001900 A1 ein Fahrzeugbremssystem, das ein Betriebsbremssystem mit einem Betriebsbremskreis und ein Anhängerbremssteuersystem umfasst. Das Anhängerbremssteuersystem umfasst ein Anhängerbremsventil mit einem Betriebsbremsanforderungseingangsanschluss, der mit dem Betriebsbremskreis verbunden ist, und einem Anhängerbetriebsbremsanforderungsausgangsanschluss, der mit einer Anhängerbremssteuerkupplung verbunden ist. Der Ausgang am Anhängerbremsanforderungs-Ausgangsanschluss ist abhängig von dem am Betriebsbremsanforderungs-Eingangsanschluss anliegenden Druck. Ein elektronisches Anhänger-Bremssteuersystem hat ein Steuerventil, um eine Druckmittelquelle mit der Anhänger-Bremssteuerkupplung zu verbinden, um die Betätigung einer Betriebsbremsfunktion am Anhänger auszulösen. Das elektronische Anhängerbremssteuersystem umfasst eine ECU, die derart konfiguriert ist, dass sie das Steuerventil betätigt, um die Betriebsbremsen des Anhängers zu betätigen, wenn sie feststellt, dass das Fahrzeug Gefahr läuft, in einen Schubbetrieb zu geraten.

Derartige Bremssysteme werden üblicherweise elektro-hydraulisch gesteuert und in Zugfahrzeugen eingesetzt, welche dazu eingerichtet sind, Anhängerfahrzeuge zu ziehen. In solchen Bremssystemen kann unter bestimmten Druckbedingungen - verursacht durch Hydraulikdruck und Ausgangsdruck - nach einer Unterdrückung eines Redundanzpfades ein unerwünschter Druck an einem insbesondere hydraulisch gesteuerten Relaisventil auftreten. Dies kann zu einem unerwünschten Restdruck an einem Anhänger-Anschluss des Bremssystems führen.

Eine Aufgabe der vorliegenden Erfindung kann darin gesehen werden, ein System der eingangs genannten Art bereitzustellen, durch welches der vorstehend beschriebenen Restdruck vermieden oder abgebaut werden kann. Die Aufgabe wird gelöst durch die Gegenstände der unabhängigen Patentansprüche. Vorteilhafte Ausführungsformen sind Gegenstand der Unteransprüche, der folgenden Beschreibung sowie der Figuren.

Gemäß der vorliegenden Erfindung wird eine Entlüftungsfunktion zum Ablassen des Drucks auf einer Ausgangsseite eines insbesondere hydro-pneumatischen Sicherheitsventils vorgeschlagen, wenn ein elektronisches Bremssystem aktiviert ist. Für die Entlüftungsfunktion kommt insbesondere eine Entlüftungsleitung zum Einsatz, über welche ein unerwünschter bzw. ein nicht vorgesehener Druck auf der Ausgabeseite abgelassen werden kann. In diesem Sinne wird gemäß einem Aspekt der Erfindung ein System zur Steuerung eines Bremsdrucks für ein Anhängerfahrzeug bereitgestellt. Das System umfasst insbesondere ein Ventil mit einer Versorgungsseite und einer Ausgabeseite sowie eine Entlüftungsleitung. Bei dem Ventil kann es sich insbesondere um ein Relaisventil handeln. Das Relaisventil kann hydraulisch angesteuert werden, um die Ausgabe von Druckluft zu steuern. Das System ist dazu eingerichtet, dem Ventil auf seiner Versorgungsseite Druckluft zuzuführen. Das Ventil ist weiterhin dazu eingerichtet, auf seiner Ausgabeseite Druckluft abzugeben. Einer Steuerung einer abzugebenden Druckluftmenge kann, wie vorstehend erwähnt, beispielsweise durch eine hydraulische Ansteuerung erfolgen. Die Entlüftungsleitung ist ferner dazu eingerichtet, die Ausgangsseite mit der Versorgungsseite zu verbinden, wenn die Versorgungsseite drucklos ist und auf der Ausgangsseite ein nicht vorgesehener Druck vorherrscht.

Konstruktiv kann die Entlüftungsleitung eine auf der Ausgangsseite angeordnete Druckleitung, die mit einem Ausgang des Ventils verbunden ist, über ein auf der Versorgungsseite angeordnetes Redundanzventil mit der drucklosen Umgebung verbinden, wenn die Versorgungsseite drucklos ist und auf der Ausgangsseite der nicht vorgesehene Druck vorherrscht. Gemäß einer Ausführungsform kann weiterhin innerhalb der Entlüftungsleitung ein Rückschlagventil angeordnet sein, welches verhindert, dass Druckluft von der Versorgungsseite über die Entlüftungsleitung auf die Ausgangsseite strömen kann. Mit anderen Worten kann das Rückschlagventil, wenn der Vorrat des Ventils unter Druck steht, eine unerwünschte Druckbeaufschlagung der Ausgangsseite des Ventils verhindern. Dadurch kann eine unbeabsichtigte Bremsbetätigung vermieden werden. In der entgegengesetzten Strömungsrichtung ermöglicht das Rückschlagventil, dass Druckluft von der Ausgangsseite über die Entlüftungsleitung auf die Versorgungsseite strömen kann, sodass der nicht vorgesehene Druck auf der Ausgabeseite abgebaut werden kann. In diesem Sinne ist gemäß einer weiteren Ausführungsform vorgesehen, dass das Rückschlagventil Druckluft ermöglicht von der Ausgangsseite über die Entlüftungsleitung auf die Versorgungsseite zu strömen.

Alternativ oder zusätzlich zu dem vorstehend beschriebenen Rückschlagventil kann innerhalb des Ventils eine Lippendichtung zum Einsatz kommen, welche die Entlüftungsleitung für Druckluft von der Versorgungsseite verschließen und für Druckluft aus der Ausgangsseite öffnen bzw. freigeben kann. Insbesondere kann die Lippendichtung innerhalb der Entlüftungsleitung angeordnet sein, welche verhindert, dass Druckluft von der Versorgungsseite über die Entlüftungsleitung auf die Ausgangsseite strömen kann. Der Entlüftungskanal kann dabei insbesondere einander gegenüberliegende Oberflächen eines Gehäuses und eines Ventilsitzelements für einen Kolbenschieber gebildet werden, wobei die Lippendichtung an einer äußeren Oberfläche des Ventilsitzelements angeordnet ist. In diesem Sinne ist gemäß einer weiteren Ausführungsform vorgesehen, dass das Ventil ein Gehäuse, wenigstens einen Kolbenschieber, ein Ventilsitzelement und eine ringförmige Lippendichtung umfasst. Dabei begrenzen das Gehäuse und das Ventilsitzelement den Entlüftungskanal. Die Lippendichtung verbindet die Ausgangsseite mit der Versorgungsseite, wenn die Versorgungsseite drucklos ist und auf der Ausgangsseite der nicht vorgesehene Druck vorherrscht.

In einer konstruktiven Ausführung kann die Lippendichtung das Ventilsitzelement innerhalb des Entlüftungskanals in einer radialen Richtung umgeben. Die Lippendichtung ist insbesondere aus einem flexiblem Material gefertigt. In einer Ausführungsform umfasst die Lippendichtung einen ringförmigen Grundkörper, wobei eine Dichtlippe in einer radialen Richtung von dem ringförmigen Grundkörper absteht. Die Dichtlippe kann insbesondere durch ihre Form und Anordnung dazu eingerichtet sein, zum einen die Entlüftungsleitung zu verschließen, sodass Druckluft von der Versorgungsseite daran gehindert wird, über die Entlüftungsleitung auf die Ausgangsseite zu gelangen. Andererseits kann die Dichtlippe die Entlüftungsleitung freigeben, sodass Druckluft von der Ausgangsseite über die Entlüftungsleitung auf die Versorgungsseite strömen kann.

Alternativ zu der Anordnung an dem Ventilsitz kann die Lippendichtung im Bereich der Entlüftungsleitung an dem Gehäuse angeordnet sein. Konstruktiv kann eine speziell geformte Lippendichtung vorgesehen sein, die nicht in den Ventilsitz, sondern in das Gehäuse des Ventils integriert ist. Mittels der Lippendichtung kann die Entlüftungsleitung ausgehend von der Ausgangsseite in Richtung der Versorgungsseite geöffnet werden, wenn der Versorgungsdruck niedriger ist als der Ausgangsdruck. In diesem Sinne ist gemäß einer weiteren Ausführungsform vorgesehen, dass Luft, die auf der Ausgangsseite unter dem nicht vorgesehenen Druck steht, einen Grundkörper der Lippendichtung in einer axialen Richtung verschiebt und eine Dichtlippe in einer radialen Richtung verschiebt, um die Entlüftungsleitung zu passieren und auf die Versorgungsseite zu gelangen.

Eine weitere Alternative kommt ohne die vorstehend beschriebenen Rückschlagventile oder Lippendichtungen aus. Stattdessen ist eine konstante kleine Leckage zwischen der Ausgangsseite und einer mit der Versorgungsseite verbundenen drucklosen Umgebung vorgesehen. Diese Leckage kann insbesondere durch die Entlüftungsleitung umgesetzt werden, innerhalb derer weder ein Rückschlagventil noch eine Lippendichtung angeordnet sein muss. In diesem Sinne ist gemäß einer weiteren Ausführungsform vorgesehen, dass die Entlüftungsleitung eine auf der Ausgangsseite angeordnete Leitung, die mit einem Ausgang des Ventils verbunden ist, dauerhaft mit einer auf der Versorgungsleitung angeordneten Leitung verbindet, die mit der drucklosen Umgebung verbunden ist.

Im Folgenden werden Ausführungsbeispiele der Erfindung anhand der schematischen Zeichnung näher erläutert, wobei gleiche oder ähnliche Elemente mit dem gleichen Bezugszeichen versehen sind. Hierbei zeigt
- Fig. 1: einen Schaltplan eines Teils eines Bremssystems eines Zugfahrzeugs zum Ziehen eines Anhängerfahrzeugs,
- Fig. 2: ein erstes Ausführungsbeispiel einer Entlüftung einer Ausgangsseite eines Relaisventils des Bremssystems nach Fig. 1, wobei die Entlüftung ein Rückschlagventil aufweist,
- Fig. 3: ein zweites Ausführungsbeispiel einer Entlüftung einer Ausgangsseite eines Relaisventils des Bremssystems nach Fig. 1, wobei eine Lippendichtung an einem Ventilsitzelement angeordnet ist,
- Fig. 4: ein drittes Ausführungsbeispiel einer Entlüftung einer Ausgangsseite eines Relaisventils des Bremssystems nach Fig. 1, wobei eine Lippendichtung in einem Gehäuse des Relaisventils angeordnet ist,
- Fig. 5: eine Abwandlung des ersten Ausführungsbeispiels nach Fig. 2 ohne ein Rückschlagventil,
- Fig. 6: eine erste mögliche Ausgestaltung eines Rückschlagventils für das erste Ausführungsbeispiel nach Fig. 2 und
- Fig. 7: eine zweite mögliche Ausgestaltung eines Rückschlagventils für das erste Ausführungsbeispiel nach Fig. 2.

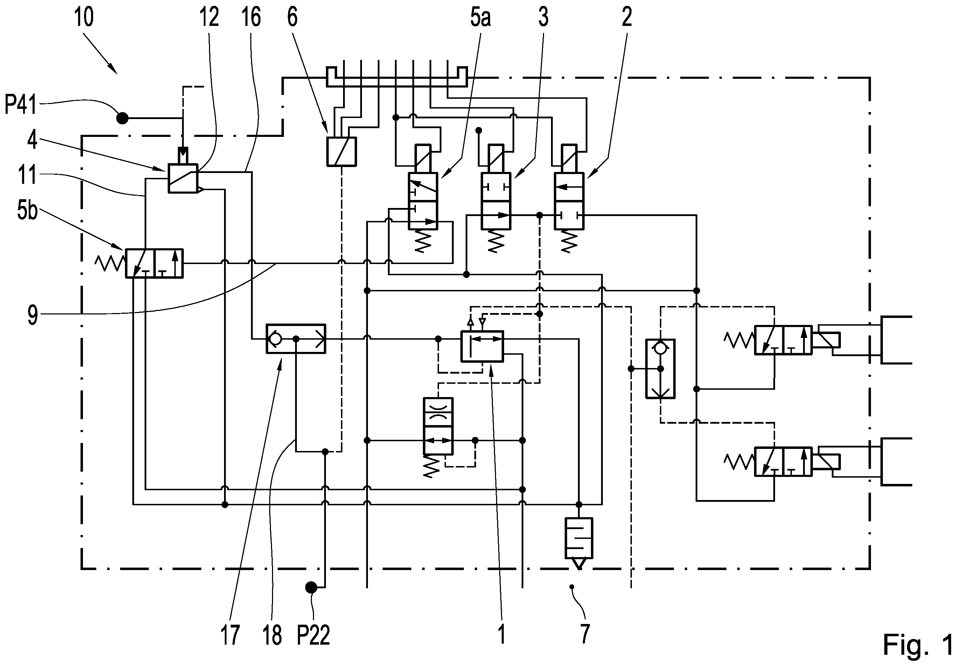

Fig. 1 zeigt ein System 10 zur Steuerung eines Bremsdrucks für einen nicht gezeigten Anhängerfahrzeug. Das System 10 kann als Bremssystem bezeichnet und in einem ebenfalls nicht dargestellten Zugfahrzeug eingesetzt werden, welches dazu eingerichtet ist, das Anhängerfahrzeug zu ziehen. Das Bremssystem 10 umfasst ein Relaisventil 1. In einem störungsfreiem Betrieb modulieren ein erstes Vorsteuerventil 2 und ein zweites Vorsteuerventil 3 einen pneumatischen Druck für das Relaisventil 1, das einen pneumatischen Ausgangsdruck an einem Anhänger-Anschluss 22 erzeugt (Anhängersteuerleitung). Zusammen mit einem Ist-Drucksensor 6 ist eine Regelung des pneumatischen Ausgangsdrucks möglich.

Um Einflüsse einer hydraulisch-pneumatischen Redundanz zu vermeiden, wird ein drittes Vorsteuerventil 5a im Normalbetrieb in eine geschlossene Stellung geschaltet. Durch Schließen des dritten Vorsteuerventils 5a wird eine erste Leitung 9 zwischen dem dritten Vorsteuerventil 5a und einem Redundanzventil 5b entlüftet, so dass das Redundanzventil 5b ebenfalls geschlossen wird. Dies bewirkt eine Entlüftung einer zweiten Leitung 11 zwischen dem Redundanzventil 5b und einem Ventil 4, das im Folgenden als Sicherheitsventil bezeichnet wird. Bei dem Sicherheitsventil 4 kann es sich insbesondere um ein hydro-pneumatisches Sicherheitsventil handeln. Das Sicherheitsventil 4 kann insbesondere als hydraulisch angesteuertes Relaisventil ausgeführt sein. Wenn die zweite Leitung 11 zwischen dem Redundanzventil 5b und dem Sicherheitsventil 4 entlüftet ist, dann steht das Sicherheitsventil 4 nicht unter Druck. Infolgedessen kann das Sicherheitsventil 4 keine Druckausgabe auf der Grundlage einer hydraulischen Anforderung über einen hydraulischen Eingangsanschluss P41 erzeugen. Dies kann als Unterdrückung des Redundanzpfades bezeichnet werden.

Unter bestimmten Druckbedingungen - verursacht durch Hydraulikdruck und Ausgangsdruck - kann es vorkommen, dass nach der vorstehend beschriebenen Unterdrückung des Redundanzpfades der pneumatische Druck an einem Ausgang 12 des Sicherheitsventils 4 wieder eingeschlossen wird und nicht abgelassen werden kann. Dies führt dann zu einem unerwünschten Restdruck an dem Anhänger-Anschluss P22 (Anhängersteuerleitung). Um diesen unerwünschten Druck abzulassen, ist eine Entlüftungsfunktion zum Ablassen des Drucks auf der Ausgangsseite bzw. an dem Ausgang 12 des Sicherheitsventils 4 vorgesehen, insbesondere wenn elektronisches Bremsen aktiviert ist.

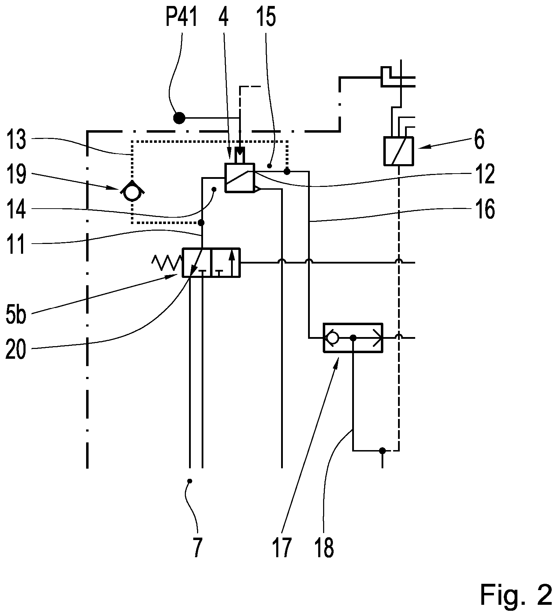

Fig. 2 zeigt ein erstes Ausführungsbeispiel mit einer solchen Entlüftungsfunktion. Dabei kommt eine Entlüftungsleitung 13 zum Einsatz. Die Entlüftungsleitung 13 verbindet eine Versorgungsseite 14 des Sicherheitsventils 4 mit einer Ausgangsseite 15 des Sicherheitsventils 4. Auf der Ausgangsseite 15 kann der vorstehend beschriebene, unerwünschte Restdruck auftreten, insbesondere in einer dritten Leitung 16. Die dritte Leitung 16 ist auf der einen Seite mit dem Ausgang 12 des Sicherheitsventils 4 verbunden. Auf der anderen Seite ist die dritte Leitung 16 über ein Wechselventil 17 und weitere Leitungsabschnitte 18 mit dem Anhänger-Anschluss P22 (siehe Fig. 1) verbunden. Auf der Versorgungsseite 14 liegt insbesondere die zweite Leitung 11, in welcher ein Druck von 0 bar vorherrscht, wenn das Redundanzventil 5b unterdrückt wird.

**In** dem Ausführungsbeispiel nach Fig. 2 ist ein erster Endabschnitt der Entlüftungsleitung 13 über die dritte Leitung 16 mit dem Ausgang 12 des Sicherheitsventils 4 verbunden. Weiterhin ist ein zweiter Endabschnitt der Entlüftungsleitung 13 mit der zweiten Leitung 11 verbunden. Innerhalb der Entlüftungsleitung 13 ist ferner eine Rückschlagventil 19 angeordnet. Das Rückschlagventil 19 verhindert, dass Druckluft aus der zweiten Leitung 11 (Versorgungsseite 14) in die dritte Leitung 16 (Ausgangsseite 15) strömen kann, sodass Druckluft aus der zweiten Leitung 11 weder zu dem Ausgang 12 des Sicherheitsventils 4 noch zu dem Anhänger-Anschluss P22 strömen kann. Wenn der Vorrat des Sicherheitsventils 4 unter Druck steht, verhindert das Rückschlagventil 19 eine unerwünschte Druckbeaufschlagung der Ausgangsseite 15 des Sicherheitsventils 4, um eine unbeabsichtigte Bremsbetätigung zu vermeiden. In der entgegengesetzten Strömungsrichtung ermöglicht das Rückschlagventil 19 im Sinne einer Entlüftung, dass Druckluft aus der dritten Leitung 16 (Ausgangsseite 15) in die zweite Leitung 11 (Versorgungsseite 14) strömen kann, sodass Druckluft aus der dritten Leitung 16 in die drucklose zweite Leitung 11 strömen kann.

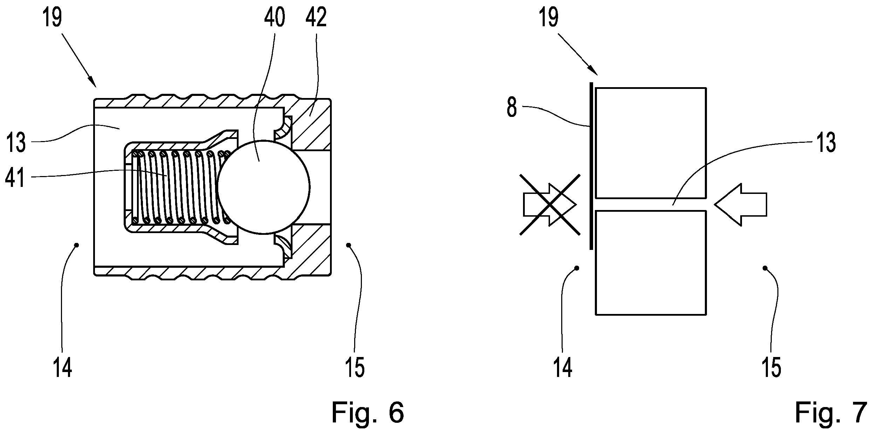

Gemäß Fig. 6 kann das Rückschlagventil 19 nach Fig. 2 eine Kugel 40, eine Feder 41 und ein Gehäuse 42 umfassen. Das Rückschlagventil 19 dichtet die Versorgungsseite 14 gegenüber der Ausgangsseite 15 über die Kugel 40 ab, die gegen das Gehäuse 42 gedrückt wird. Das Rückschlagventil 19 öffnet gegen eine durch die Feder 41 erzeugte Federkraft, wenn der Druck auf der Versorgungsseite 14 kleiner ist als der Druck auf der Versorgungsseite 15 bzw. wenn der Druck auf der Ausgangsseite 15 größer ist als auf der Versorgungsseite 14. Alternativ können auch sogenannte Entenschnabel-Rückschlagventile oder Regenschirm-Rückschlagventile zum Einsatz kommen. Fig. 7 zeigt eine besonders einfache Form eines Rückschlagventils 19 für die Ausführungsform nach Fig. 2. Dabei kommt anstatt einer Feder und einer Kugel ein einfaches Stück Gummi 8 zum Einsatz, das die Entlüftungsleitung 13 zwischen der Versorgungsseite 14 und der Ausgangsseite 15 in der vorstehend beschriebenen Weise schließen und öffnen kann.

Sobald Druckluft auf der Ausgangsseite 15 des Sicherheitsventils 4 eingeschlossen ist und die Versorgung des Sicherheitsventils 4 aufgrund der Unterdrückung des Redundanzpfades 0 bar beträgt, öffnet das Rückschlagventil 19 die Entlüftungsleitung 13 zwischen dem Ausgang 12 und der Versorgung 11 bzw. 14 des Sicherheitsventils 4. Dadurch wird die Druckluft von dem Ausgang 12 des Sicherheitsventils 4 über die Entlüftungsleitung 13, die zweite Leitung 11 und einen Auslass 20 des Redundanzventils 5b in Richtung einer drucklosen Umgebung 7 abgelassen. Die Druckluft von der Ausgangsseite 15 des Sicherheitsventils 4 kann entweder vollständig über das Rückschlagventil 19 abgelassen werden. Alternativ kann die Druckluft durch eine Öffnung des Ventilsitzes des Sicherheitsventils 4 infolge einer unausgeglichenen Kraft aufgrund eines geringen Luftablasses über das Rückschlagventil 19 abgelassen werden.

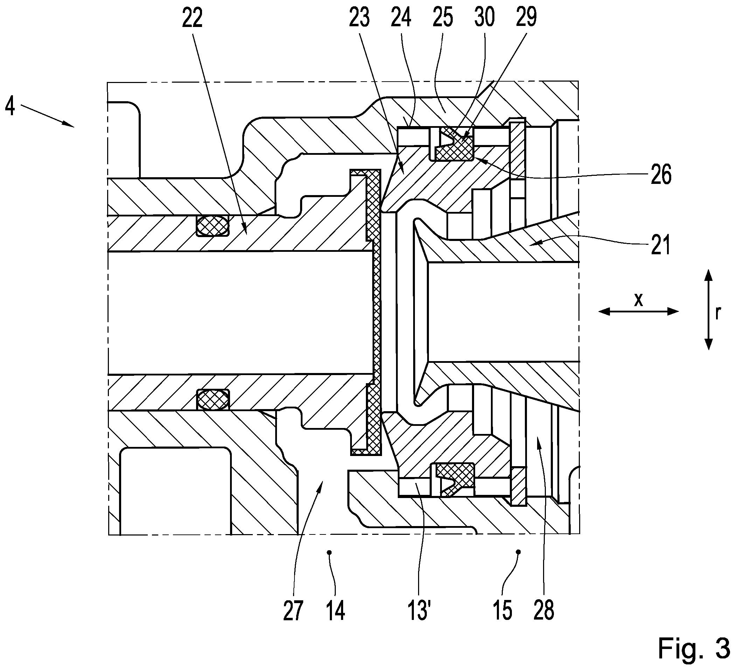

Fig. 3 zeigt ein zweites Ausführungsbeispiel mit einer Entlüftungsfunktion. Das Sicherheitsventil 4 ist gemäß diesem Ausführungsbeispiel als Relaisventil ausgeführt, das in einer Längsschnittdarstellung teilweise durch Fig. 3 gezeigt ist. Das Sicherheitsventil 4 umfasst einen ersten Kolbenschieber 21 und einen zweiten Kolbenschieber 22, die in einer axialen Richtung der Kolbenschieber 21, 22 aufeinander zu von voneinander weg verschoben werden können. In einem Betätigungs-Zustand (nicht durch Fig. 3 gezeigt) ist der erste Kolbenschieber 21 in Kontakt mit dem zweiten Kolbenschieber 22. Der zweite Kolbenschieber 22 ist dann weiterhin in Kontakt mit einem Ventilsitzelement 23 des Sicherheitsventils 4.

Das Ventilsitzelement 23 ist in dem gezeigten Ausführungsbeispiel ringförmig ausgeführt. Eine äußere Oberfläche 24 des Ventilsitzelements 23 begrenzt gemeinsam mit einem Gehäuse 25 des Sicherheitsventils 4 eine Entlüftungsleitung 13'. Die Entlüftungsleitung 13' verbindet die Versorgungsseite 14 mit der davon in der axialen Richtung x beabstandet angeordneten Ausgangsseite 15 des Sicherheitsventils 4. Insbesondere verbindet die Entlüftungsleitung 13' eine auf der Versorgungsseite 14 angeordnete Versorgungskammer 27 mit einer auf der Ausgangsseite 15 angeordneten Ausgangskammer 28. Die Versorgungskammer 27 kann beispielsweise mit der zweiten Leitung 11 (Fig. 1) verbunden sein. Die Ausgangskammer 28 kann beispielsweise mit dem Ausgang 12 (Fig. 1, 2) des Sicherheitsventils 4 verbunden sein. Die äußere Oberfläche 24 des Ventilsitzelements 23 kann im Bereich der Entlüftungsleitung 13' in einer radialen Richtung r gegenüber dem Gehäuse 25 mittels einer ringförmigen Lippendichtung 26 abgedichtet werden. Die Lippendichtung 26 besteht aus einem flexiblem Material. Die Lippendichtung 26 umfasst einen ringförmigen Grundkörper 29. Eine Dichtlippe 30 steht in der radialen Richtung r von dem ringförmigen Grundkörper 29 ab. Die Dichtlippe 30 ist derart geformt und geneigt, dass die Dichtlippe 30 in einem Normalbetrieb die Verbindungsleitung 13' zwischen der Versorgungskammer 27 und der Ausgangskammer 28 verschließt. Somit kann keine Druckluft aus der Versorgungskammer 27 über die Entlüftungsleitung 13' in die Ausgangskammer 28 gelangen.

Wenn der vorstehend beschriebene, unerwünschte Restdruck innerhalb der Ausgangskammer 28 auftritt, dann herrscht dieser Restdruck auch innerhalb des Entlüftungskanals 13' vor und ist höher als ein Druck in der Versorgungskammer 27 (insbesondere 0 bar). Durch den Restdruck wird die Dichtlippe 30 derart verformt, dass die Dichtlippe 30 den Entlüftungskanal nicht länger verschließt, sondern freigibt, sodass der Restdruck aus der Ausgangskammer 28 über den Entlüftungskanal 13 und die Versorgungskammer 27 entspannt werden kann, z.B. über den Auslass 20 des Redundanzventils 5b in die drucklose Umgebung (vgl. Fig. 1, 2). Fig. 3 zeigt eine Integration der Lippendichtung 26 in das Ventilsitzelement 23. Alternativ kann die Lippendichtung 26 auch in dem Gehäuse 25 angeordnet sein, z.B. in einer nicht gezeigten Nut, welche das Ventilsitzelement 23 im Bereich des Entlüftungskanals 13' in der radialen Richtung r umgibt.

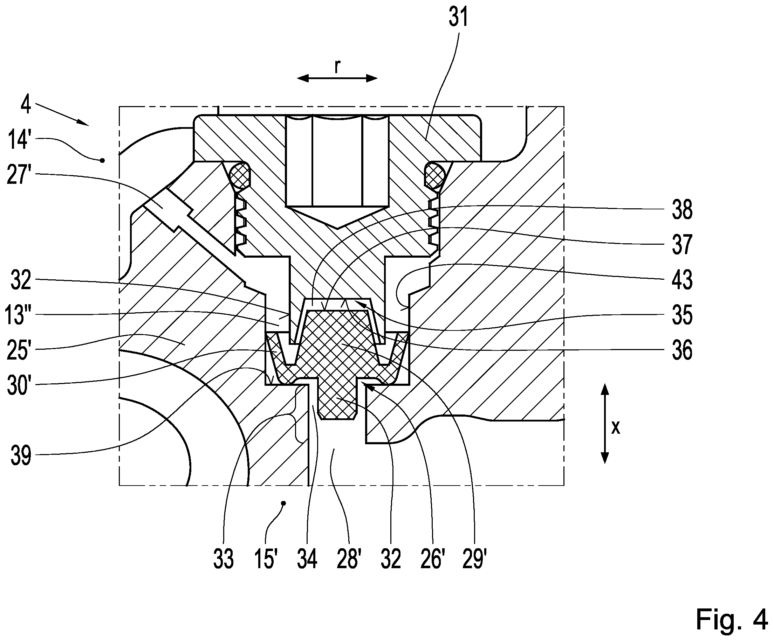

Fig. 4 zeigt ein drittes Ausführungsbeispiel mit einer Entlüftungsfunktion. Das Sicherheitsventil 4 weist ein Gehäuse 25' und einen Kolbenschieber 31 auf. Eine äußere Oberfläche 32 des Kolbenschiebers 31 und eine innere Oberfläche 43 des Gehäuses 25' begrenzen zwischen sich eine Entlüftungsleitung 13". Die Entlüftungsleitung 13" verbindet die Versorgungsseite 14' mit der davon beabstandet angeordneten Ausgangsseite 15' des Sicherheitsventils 4. Insbesondere verbindet die Entlüftungsleitung 13" eine auf der Versorgungsseite 14' angeordnete Versorgungskammer 27' mit einer auf der Ausgangsseite 15' angeordneten Ausgangskammer 28'. Die Versorgungskammer 27' kann beispielsweise mit der zweiten Leitung 11 (Fig. 1) verbunden sein. Die Ausgangskammer 28' kann beispielsweise mit dem Ausgang 12 (Fig. 1, 2) des Sicherheitsventils 4 verbunden sein.

Die Entlüftungsleitung 13" kann mittels einer Lippendichtung 26' verschlossen werden. Die Lippendichtung 26' besteht aus einem flexiblem Material. Die Lippendichtung 26' ist im Bereich der Entlüftungsleitung 13" an dem Gehäuse 25' angeordnet. Die Lippendichtung 26' umfasst einen zentralen Grundkörper 29'. Eine Dichtlippe 30' steht in einer radialen Richtung r von dem Grundkörper 29' ab. Die Dichtlippe 30' ist derart geformt und geneigt, dass die Dichtlippe 30' in einem Normalbetrieb die Entlüftungsleitung 13" zwischen der Versorgungskammer 27' und der Ausgangskammer 28' verschließt. Somit kann keine Druckluft aus der Versorgungskammer 27' über die Entlüftungsleitung 13" in die Ausgangskammer 28' gelangen.

Die Lippendichtung 26' umfasst weiterhin einen Zapfen 32. Der Zapfen 32 steht in einer axialen Richtung x von dem Grundkörper 29' ab. Der Zapfen 32 ist zylinderförmig und die Ausgangskammer 28' weist einen dazu passenden rohrförmigen Abschnitt 33 auf. Der Zapfen 32 ist in den rohrförmigen Abschnitt 33 der Ausgangskammer 28 eingesetzt. Ein Durchmesser des rohrförmigen Abschnitts 33 der Ausgangskammer 28 ist größer als ein Durchmesser des Zapfens 32 der Lippendichtung 26, sodass ein insbesondere ringförmiger erster Spalt 34 zwischen einer äußeren Oberfläche des Zapfens 32 und einer inneren Oberfläche des rohrförmigen Abschnitts 33 besteht. Unter dem vorstehend beschriebenen Restdruck stehende Luft kann aus der Ausgangskammer 28' in den ersten Spalt 34 strömen.

Eine Stirnseite 35 des Kolbenschiebers 31 ist weiterhin dem zentralen Grundkörper 29' der Lippendichtung 26' zugewandt. Im Bereich der Stirnseite 35 weist der Kolben 31 eine Ausnehmung 36 auf, die mit einer dem Kolben 31 zugewandten äußeren Oberfläche 37 des Grundkörpers 29 korrespondiert. Zwischen der Ausnehmung 36 und der äußeren Oberfläche 37 des Grundkörpers 29' besteht ein zweiter Spalt 38, der sich in einer axialen Richtung x erstreckt. Die Dichtlippe 30' liegt auf einer Schulter 39 des Gehäuses 25' auf und verschließt somit den ersten Spalt 34 in Richtung der Versorgungskammer 27'. Wenn unter dem vorstehend beschriebenen Restdruck stehende Luft aus der Ausgangskammer 28' in den ersten Spalt 34 strömt, dann wird in dem ersten Spalt 34 ein Druck aufgebaut, der bewirkt, dass die Lippendichtung 26' in der axialen Richtung x in Richtung des Kolbens 31 verschoben wird, sodass die Dichtlippe 30' nicht länger auf der Schulter 39 des Gehäuses 25' aufliegt. Die Druckluft kann an der Schulter 39 vorbeiströmen und die Dichtlippe 30' in der radialen Richtung r zu dem Grundkörper 29' hin elastisch verbiegen. Dadurch wird die Ausgangskammer 28' über den ersten Spalt 34 und über die Entlüftungsleitung 13" mit der Versorgungskammer 27' verbunden. Die vorstehend beschriebene axiale Verschiebung kann soweit erfolgen, bis der axiale zweite Spalt 38 geschlossen wird, sodass die äußere Oberfläche 37 des Grundkörpers 29' an der Stirnseite 35 des Kolbens 31 anschlägt.

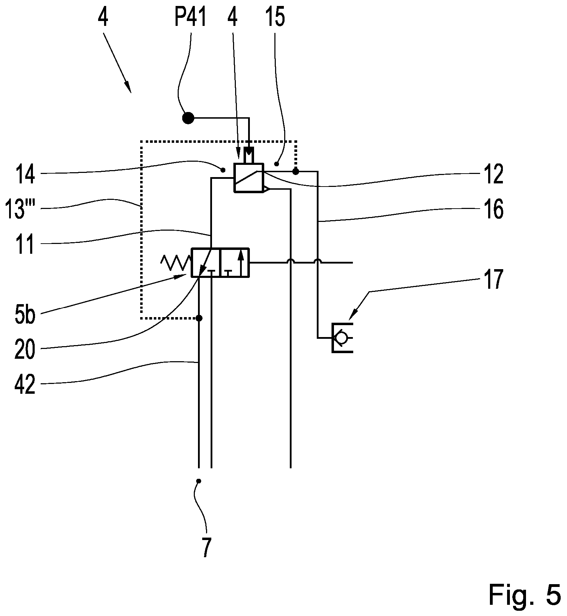

Fig. 5 zeigt eine Abwandlung des ersten Ausführungsbeispiels nach Fig. 2 ohne Rückschlagventil 19 aber mit einer konstanten kleine Leckage zwischen dem Ausgang 12 des Sicherheitsventils 4 und dem Auslass 20 des Redundanzventils 5b in Richtung der drucklosen Umgebung 7. Diese Leckage wird durch die Entlüftungsleitung 13‴ nach Fig. 2 umgesetzt, innerhalb derer das Rückschlagventil 19 (Fig. 2) fehlt. Um einen unerwünscht hohen Druckluftverlust zu verhindern, kann ein Strömungsquerschnitt der Entlüftungsleitung 13‴ nach Fig. 5 entsprechend kleiner gewählt werden als in dem Ausführungsbeispiel nach Fig. 2.

Wie in Fig. 2 verbindet die Entlüftungsleitung 13‴ eine Ausgangsseite 15 des Sicherheitsventils 4 mit einer Versorgungsseite 14 des Sicherheitsventils 4. Auf der Ausgangsseite 15 kann der vorstehend beschriebene, unerwünschte Restdruck auftreten, insbesondere in einer dritten Leitung 16. Die dritte Leitung 16 ist auf der einen Seite mit dem Ausgang 12 des Sicherheitsventils 4 verbunden. Auf der anderen Seite ist die dritte Leitung 16 über ein Wechselventil 17 und weitere Leitungsabschnitte 18 mit dem Anhänger-Anschluss P22 (siehe Fig. 1) verbunden. Auf der Versorgungsseite 14 liegt insbesondere die zweite Leitung 11, welche drucklos ist, wenn das Redundanzventil 5b unterdrückt wird. In dem Ausführungsbeispiel nach Fig. 5 ist ein erster Endabschnitt der Entlüftungsleitung 13 über die dritte Leitung 16 mit dem Ausgang 12 des Sicherheitsventils 4 verbunden. Weiterhin ist ein zweiter Endabschnitt der Entlüftungsleitung 13 mit einer auf der Versorgungsseite angeordneten vierten Leitung 42 verbunden. Sobald Druckluft auf der Ausgangsseite 15 des Sicherheitsventils 4 eingeschlossen ist und die Versorgung des Sicherheitsventils 4 aufgrund der Unterdrückung des Redundanzpfades 0 bar beträgt, wird die Druckluft von dem Ausgang 12 des Sicherheitsventils 4 unter Umgehung des Auslasses 20 des Redundanzventils 5b über die vierte Leitung 42 in Richtung der drucklosen Umgebung 7 abgelassen.

### Bezugszeichen

- P22: Anhänger-Anschluss
- P41: hydraulischer Eingangsanschluss
- r: radiale Richtung
- x: axiale Richtung Kolbenschieber

- 1: Relaisventil
- 2: erstes Vorsteuerventil
- 3: zweites Vorsteuerventil
- 4: Sicherheitsventil
- 5a: drittes Vorsteuerventil
- 5b: Redundanzventil
- 6: Ist-Drucksensor
- 7: drucklose Umgebung
- 8: Stück Gummi
- 9: erste Leitung
- 10: Bremssystem
- 11: zweite Leitung
- 12: Ausgang Sicherheitsventil
- 13: Entlüftungsleitung
- 13': Entlüftungsleitung
- 13": Entlüftungsleitung
- 13‴: Entlüftungsleitung
- 14: Versorgungsseite Sicherheitsventil
- 14': Versorgungsseite Sicherheitsventil
- 15: Ausgangsseite Sicherheitsventil
- 15': Ausgangsseite Sicherheitsventil
- 16: dritte Leitung
- 17: Wechselventil
- 18: weitere Leitungsabschnitte
- 19: Rückschlagventil
- 20: Auslass Redundanzventil
- 21: erster Kolbenschieber
- 22: zweiter Kolbenschieber
- 23: Ventilsitzelement
- 24: äußere Oberfläche Ventilsitzelement
- 25: Gehäuse
- 25': Gehäuse
- 26: Lippendichtung
- 26: Lippendichtung
- 27: Versorgungskammer
- 27': Versorgungskammer
- 28: Ausgangskammer
- 28': Ausgangskammer
- 29: Grundkörper
- 29': Grundkörper
- 30: Dichtlippe
- 30': Dichtlippe
- 31: Kolbenschieber
- 32: Zapfen Lippendichtung
- 33: rohrförmiger Abschnitt Ausgangskammer
- 34: Spalt
- 35: Stirnseite Kolben
- 36: Ausnehmung Kolben
- 37: äußere Oberfläche Grundkörper
- 38: zweiter Spalt
- 39: Schulter Gehäuse
- 40: Kugel
- 41: Feder
- 42: vierte Leitung
- 43: innere Oberfläche Gehäuse

## Patentansprüche

1. System (10) zur Steuerung eines Bremsdrucks für ein Anhängerfahrzeug, das System (10) umfassend
- ein Ventil (4) mit einer Versorgungsseite (14; 14') und einer Ausgabeseite (15; 15') sowie
- eine Entlüftungsleitung (13; 13'; 13"; 13"'),
wobei
- das System (10) dazu eingerichtet ist, dem Ventil (4) auf seiner Versorgungsseite (14; 14') Druckluft zuzuführen,
- das Ventil (4) dazu eingerichtet ist, auf seiner Ausgabeseite (15; 15') Druckluft abzugeben, und
- die Entlüftungsleitung (13; 13'; 13"; 13‴) dazu eingerichtet ist, die Ausgangsseite (15; 15') mit der Versorgungsseite (14; 14') zu verbinden, wenn die Versorgungsseite (14; 14') drucklos ist und auf der Ausgangsseite (15; 15') ein nicht vorgesehener Druck vorherrscht.

2. System (10) nach Anspruch 1, wobei die Entlüftungsleitung (13) eine auf der Ausgangsseite (15) angeordnete Druckleitung (16), die mit einem Ausgang (12) des Ventils (4) verbunden ist, über ein auf der Versorgungsseite (14) angeordnetes Redundanzventil (5b) mit der drucklosen Umgebung (7) verbindet, wenn die Versorgungsseite (14) drucklos ist und auf der Ausgangsseite (15) der nicht vorgesehene Druck vorherrscht.

3. System (10) nach Anspruch 1 oder 2, wobei innerhalb der Entlüftungsleitung (13) ein Rückschlagventil (19) angeordnet ist, welches verhindert, dass Druckluft von der Versorgungsseite (14) über die Entlüftungsleitung (13) auf die Ausgangsseite (15) strömen kann.

4. System (10) nach Anspruch 3, wobei das Rückschlagventil (19) Druckluft ermöglicht von der Ausgangsseite (15) über die Entlüftungsleitung (13) auf die Versorgungsseite (14) zu strömen.

5. System (10) nach Anspruch 1, wobei innerhalb der Entlüftungsleitung (13') eine Lippendichtung (26) angeordnet ist, welche verhindert, dass Druckluft von der Versorgungsseite (14) über die Entlüftungsleitung (13') auf die Ausgangsseite (15) strömen kann.

6. System (10) nach Anspruch 5, wobei
- das Ventil (4) ein Gehäuse (25), wenigstens einen Kolbenschieber (21, 22), ein Ventilsitzelement (23) und eine ringförmige Lippendichtung (26) umfasst,
- das Gehäuse (25) und das Ventilsitzelement (23) den Entlüftungskanal (13') begrenzen, und
- die Lippendichtung (26) die Ausgangsseite (15) mit der Versorgungsseite (14) verbindet, wenn die Versorgungsseite (14) drucklos ist und auf der Ausgangsseite (15) der nicht vorgesehene Druck vorherrscht.

7. System (10) nach Anspruch 6, wobei die Lippendichtung (26) das Ventilsitzelement (23) innerhalb des Entlüftungskanals (13') in einer radialen Richtung (r) umgibt.

8. System (10) nach Anspruch 7, wobei
- die Lippendichtung (26) einen ringförmigen Grundkörper (29) und eine von dem Grundkörper (29) in der radialen Richtung (r) abstehende Dichtlippe (30) umfasst, und
- die Dichtlippe (30) dazu eingerichtet ist,
- die Entlüftungsleitung (13') zu verschließen, sodass Druckluft von der Versorgungsseite (14) daran gehindert wird, über die Entlüftungsleitung (13') auf die Ausgangsseite (15) zu gelangen, und
- die Entlüftungsleitung (13') freizugeben, sodass Druckluft von der Ausgangsseite (15) über die Entlüftungsleitung (13') auf die Versorgungsseite (14) strömen kann.

9. System (10) nach einem der Ansprüche 5 bis 8, wobei die Lippendichtung (26') im Bereich der Entlüftungsleitung (13") an dem Gehäuse (25') angeordnet ist.

10. System (10) nach Anspruch 9, wobei Luft, die auf der Ausgangsseite (15') unter dem nicht vorgesehenen Druck steht, einen Grundkörper (29') der Lippendichtung (26') in einer axialen Richtung (x) verschiebt und eine Dichtlippe (30') in einer radialen Richtung (r) verschiebt, um die Entlüftungsleitung (13") zu passieren und auf die Versorgungsseite (14') zu gelangen.

11. System (10) nach Anspruch 1, wobei die Entlüftungsleitung (13‴) eine auf der Ausgangsseite (15) angeordnete Leitung (16), die mit einem Ausgang (12) des Ventils (4) verbunden ist, dauerhaft mit einer auf der Versorgungsseite (14) angeordneten Leitung (42) verbindet, die mit der drucklosen Umgebung (7) verbunden ist.
